# EUROPEAN PATENT APPLICATION

(11) **EP 2 015 040 A2**
(43) Date of publication of application: **14.01.2009**
(21) Application number: 08154927.1
(22) Date of filing: 22.04.2008
(51) Int. Cl.: G01K 1/14, G01J 5/04

(54) **Device for monitoring the temperature of food products**

(30) Priority: 14.06.2007 IT MI20071201
(71) Applicant: Afinox S.r.l., 35010 Marsango (Padova) (IT)
(72) Inventor: Facco, Amelio, 35010, MARSANGO (Padova) (IT); Dalla Tor, Paolo, 30020, MARCON (Venezia) (IT)
(74) Representative: De Gregori, Antonella

(57) **Abstract**

Device for monitoring the temperature in food products comprising a supporting element (2) having a first portion suitable for acting as a grip (21) and a second portion suitable for acting as a shell (22) for at least one contact temperature sensor (3) consisting of a sharpened metallic rod (31) suitable for being deeply inserted into the food product (A). Said device also comprises an infrared temperature sensor (4), suitable for monitoring the temperature on the surface of the food product.

## Description

The present invention relates to a device for monitoring the temperature in food products situated inside an insulated cell.

Furthermore, the present invention also relates to a method and cooling system for food products using said device.

For the purposes of the present invention, rapid temperature abatement refers to the passage of a food product from a positive high temperature, for example 80°C, to a temperature lower than 10°C, for example 3°C in a time ranging from 90 minutes to 110 minutes.

This abatement must be rapid in order to limit to the maximum the formation of bacterial charge which is formed and multiplies between 10°C and 65°C.

Insulated cells are known in the state of the art, in which there is a cooling organ, consisting of a refrigerating circuit possibly assisted by one or more ventilators suitable for circulating the air so as to increase the convention coefficient inside the cell.

At present, if a cooling apparatus is to be used for abating the temperature of a product, i.e. bringing it from a positive temperature close to about three degrees centigrade, there is the risk, in order to also cool its interior, of ice forming on its surface, or of having much longer abatement times which are not compatible with the necessity of limiting the duration of the abatement and therefore bacterial proliferation.

Solutions have so far been adopted which, as they have to treat all types of food products and of all sizes, are insufficient and unsuitable for reducing the abatement times.

Analogously, if a rapid thawing of a frozen product is to be effected, there is still the risk of the core of the product remaining frozen with the surface having temperatures higher than 10°C, and consequently within a temperature range in which bacterial proliferation accelerates considerably, i.e. of having excessive thawing times.

The Applicant has considered the problem of providing an abatement or defrosting cycle of products in which the desired temperature is obtained, which is uniform over the whole food product in optimized times, at the same time guaranteeing the best preservation of the organoleptic and wholesome properties of the product.

The Applicant has produced a device for monitoring the temperature, capable of monitoring both the surface temperature and the internal temperature of a food product, situated inside an insulated cell and transmitting this information to a processing unit of the refrigerating unit.

An aspect of the present invention relates to a device for monitoring the temperature in food products comprising a supporting element having a first portion suitable for acting as a grip and a second portion suitable for acting as a shell for at least one contact temperature sensor consisting of a sharpened metallic rod suitable for being deeply inserted into the food product, characterized in that it also comprises at least one infrared temperature sensor, suitable for monitoring the temperature on the surface of the food product.

The characteristics and advantages of the present invention will appear more evident from the following illustrative and non-limiting description, referring to the enclosed figures in which:
- figure 1 illustrates a device under operative conditions according to the present invention;
- figure 2a illustrates a device according to a first embodiment of the present invention;
- figure 2b illustrates a device according to a second embodiment of the present invention;
- figure 2c illustrates a device according to a third embodiment of the present invention;

With reference to the above figures, the device according to the present invention comprises a supporting element 2 preferably curved or "L"-shaped, which has a first portion suitable for acting as a grip 21 and a second portion suitable for acting as a shell for at least one contact temperature sensor 3. The device also comprises an infrared temperature sensor 4, suitable for monitoring the temperature on the surface of the food product (surface sensor).

The contact temperature sensor comprises a sharpened metallic rod 31, made of steel for example, suitable for being deeply inserted in the food product A in order to monitor its internal temperature (depth sensor).

The food products A are preserved in an insulated cell (not illustrated) which comprises a container body, whose walls are suitably insulated and provided for example with a series of shelves suitable for housing food products.

In a position below said food compartment, there is preferably a control compartment comprising an electronic control unit, preferably equipped with a suitable control push-button panel for a user and a cooling unit comprising a condensing unit connected to an evaporator which is inserted in the food compartment.

The device according to the invention also comprises one or more electric wires C through which it is connected to said electronic control unit.

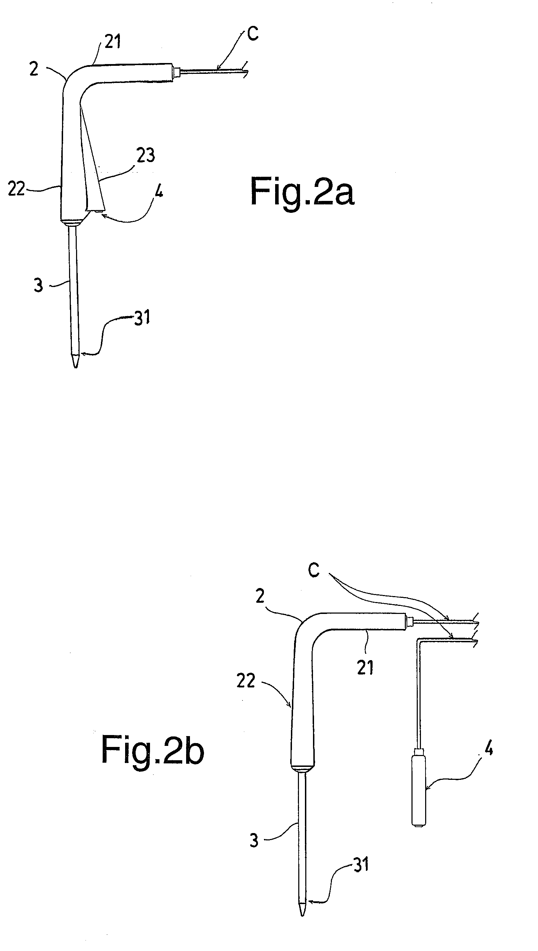

In a first embodiment illustrated in figure 2a, the shell 22 of the device also comprises a silicon sheath 23 in which the infrared sensor 4 is housed, so that it is situated in an area close to the grip of the device. This sheath in the end part also acts as a gripping handle and allows the minimum distance from the surface of the food product to be defined, there being a mechanical limit which prevents closer approach to the surface of the food product, thus avoiding the risk of contact and consequent error in the reading of the surface temperature on the part of the infrared sensor.

In a second embodiment illustrated in figure 2b, the shell only englobes the contact sensor 3, whereas the infrared sensor is supplied separately to allow a freer positioning of these inside the cell. In this case, specific supports inside the cell can be provided for constraining the sensors.

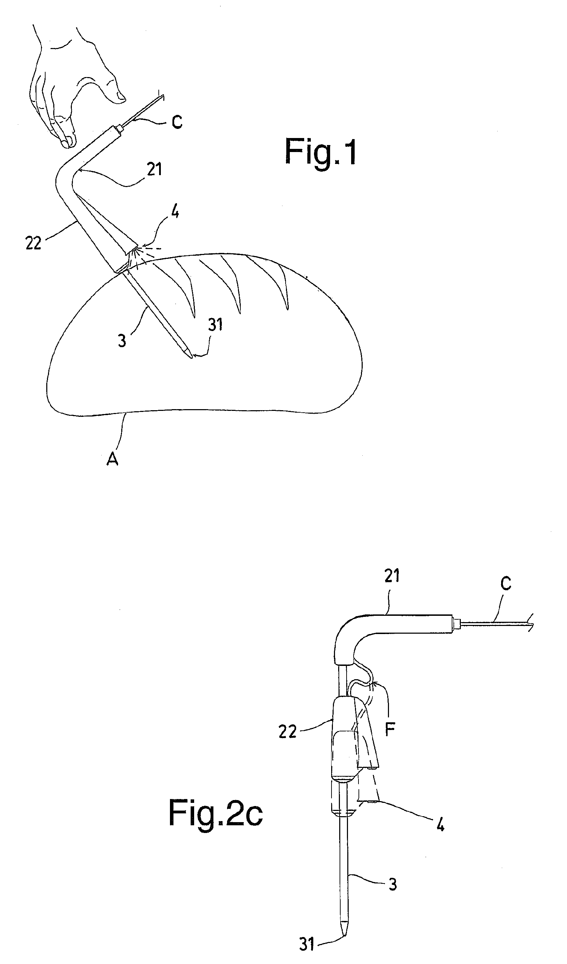

In a third embodiment illustrated in figure 2c, the shell 23 slides on the rod and the sheath of the infrared sensor is integral with said shell, so that the latter is able to have an excursion on the steel rod and therefore regulate its distance from the surface whose temperature is to be monitored.

This allows the different dimensions of the food product and the variability of the distance of the infrared sensor from the surface of the food product to be compensated. Once the first temperature sensor has penetrated the product, the infrared sensor can be brought closer until the rubber part, which acts as spacer, is almost in contact with the food product. This solution envisages the presence of an extendable wire F which connects the shell of the sensor to the grip 21 of the device, the length of said wire determines the excursion allowed to the infrared sensor on the rod.

These sensors are connected with said electronic control unit, which specifically controls the condensing unit.

The contemporaneous use of the surface and depth sensors allows the degree of thermal conductivity of the product to be accurately determined and consequently to calibrate, with specific algorithms, the quantity of cooling power to be supplied for cooling the food product below the maximum expected times (for example 110'). Furthermore, the contemporaneous monitoring of the temperature on the surface and in depth allows the air cooling to be pushed to the limit to a negative temperature (for example lower than -15°C), thus accelerating the cooling process and at the same time indicating the starting of the risk of the formation of ice on the surface, which is eliminated by raising the temperature of the air to values close to 0°C.

The algorithm which governs the cooling cycle can indicate the expected abatement times more accurately.

The difference in temperature between the internal probe and the surface probe and the variation rate of this value is indicative of the difficulty in abating the food product and the necessity of increasing or reducing the cooling capacity.

The constant monitoring of the surface temperature, on the other hand, limits the risk of causing the formation of ice on the surface of the product or even worse internally.

The monitoring of the temperature on the surface together with the datum revealed by the depth probe in the centre of the food product consequently allow to monitor the thermal conduction of the food product itself and consequent thermal capacity to be subtracted for reaching the time objectives required in the temperature abatement. Furthermore, the formation of ice on the surface is avoided and at the same time, in a first stage, the air cooling to a negative temperature can be pushed to the limit.

In the case of a defrosting process, on the other hand, the temperature value monitored on the surface, processed by means of the control algorithm, allows the product to be heated, in the first defrosting phase, also with temperatures of the air higher than 10°C until a temperature value of the surface higher than 0°C is monitored. In this case, in order to avoid entering a temperature zone in which bacterial proliferation is accelerated, the air temperature of the cell is brought back to below 10°C until complete defrosting has been effected. If the depth sensor can be inserted into the centre of the product, it certifies the complete defrosting of the whole food product.

## Claims

1. A device for monitoring the temperature in food products comprising a supporting element (2) having a first portion suitable for acting as a grip (21) and a second portion suitable for acting as a shell (22) for at least one contact temperature sensor (3) consisting of a sharpened metallic rod (31) suitable for being deeply inserted into the food product (A),
**characterized in that** it also comprises at least one infrared temperature sensor (4), suitable for monitoring the temperature on the surface of the food product.

2. The device according to claim 1, wherein said shell (22) also comprises a sheath (23) in which the infrared sensor (4) is housed so that it is situated in an area close to the grip.

3. The device according to claim 1, wherein said at least one infrared sensor is constrained inside the cooling cell which contains food products by means of suitable supports.

4. The device according to claim 1, wherein the shell (23) slides on the rod (31) and the sheath of the infrared sensor is integral with said shell.

5. The device according to claim 4, wherein an extendable wire (F) connects the shell of the sensor to the grip (21) of the device, the length of said wire determining the excursion allowed to the infrared sensor on the rod.
